# EUROPÄISCHE PATENTSCHRIFT

(11) **EP 2 419 294 B1**
(45) Veröffentlichungstag und Bekanntmachung des Hinweises auf die Patenterteilung: **13.04.2016**
(21) Anmeldenummer: 11708989.6
(22) Anmeldetag: 25.02.2011
(51) Int. Cl.: B60K 6/48, B60K 6/38, B60W 10/02, F16D 33/02, B60K 6/383, B60K 6/547, B60W 10/18, F16D 47/06, B60W 10/196, F02N 7/00, F16H 41/24, F16H 45/02

(54) **ANTRIEBSSTRANG FÜR EIN KRAFTFAHRZEUG**
DRIVETRAIN FOR A MOTOR VEHICLE
CHAÎNE CINÉMATIQUE POUR VÉHICULE AUTOMOBILE

(30) Priorität: 25.03.2010 DE 102010012965
(43) Veröffentlichungstag der Anmeldung: 22.02.2012
(73) Patentinhaber: Voith Patent GmbH, 89522 Heidenheim (DE)
(72) Erfinder: MEIER-BURKAMP, Gerhard, 89522 Heidenheim (DE); KRIEGER, Helmut, 89129 Langenau (DE)
(86) Internationale Anmeldenummer: PCT/EP2011/000938
(87) Internationale Veröffentlichungsnummer: WO 2011/116864

(56) Entgegenhaltungen:
- DE-A1- 10 219 080
- DE-A1-102007 004 462
- DE-A1-102008 015 226
- JP-A- 2003 220 842
- US-A- 3 625 323
- US-A1- 2009 283 344

## Beschreibung

Die Erfindung betrifft einen Antriebsstrang für ein Kraftfahrzeug nach der im Oberbegriff von Anspruch 1 näher definierten Art. Insbesondere betrifft die Erfindung außerdem die Verwendung eines solchen Antriebsstrangs für ein Nutzfahrzeug, bevorzugt für einen Omnibus, wie er beispielsweise im städtischen Nahverkehr eingesetzt werden kann.

Aus dem allgemeinen Stand der Technik sind hybridisierte Antriebssysteme, welche über ein primäres Antriebsaggregat einerseits und eine elektrische Maschine andererseits verfügen, hinlänglich bekannt. Bei dem primären Antriebsaggregat handelt es sich dabei häufig um einen Verbrennungsmotor, beispielsweise einen Dieselmotor. Die elektrische Maschine dient in dem Antriebsstrang einerseits zum Rekuperieren von Bremsenergie und andererseits zum Antreiben des Kraftfahrzeugs mit der gespeicherten Energie, entweder alleine oder zusätzlich zur Antriebsleistung aus dem primären Antriebsaggregat. Typischerweise wird die elektrische Maschine dazu parallel zum Leistungspfad der über das primäre Antriebsaggregat aufgebrachten Leistung installiert.

Eine der Möglichkeiten ist dabei die Anordnung der elektrischen Maschine am Getriebeausgang. Dies hat den Nachteil, dass die elektrische Maschine einen sehr weiten Drehmomentbereich abdecken muss, insbesondere beim Einsatz in Nutzfahrzeugen wie beispielsweise Stadt- oder Überlandbussen. Es wird hierfür eine elektrische Maschine mit vergleichsweise großem Bauvolumen erforderlich, welche Antriebsmomente bis zu 7000 Nm aufbringen muss. Alternativ oder ergänzend kann hier eine Getriebestufe zur Untersetzung zwischen der elektrischen Maschine und dem Antriebsstrang mit eingesetzt werden. Dies verlagert die Anforderung lediglich von einem großen Drehmomentbereich hin zu einem großen nutzbaren Drehzahlbereich der elektrischen Maschine, sodass die Probleme vergleichbar bleiben.

Ein alternativer Aufbau sieht vor, dass die elektrische Maschine am Getriebeeingang angeordnet wird. Da bei Nutzfahrzeuggetrieben häufig eine hydrodynamische Komponente entweder als Anfahrelement oder als getriebeintegrierter Wandler vorhanden ist, hat dies den Nachteil, dass die elektrische Maschine die hydrodynamische Komponente mit antreibt. Dies führt dann wiederum zu Problemen bei der Auslegung der hydrodynamischen Komponente. Die Kennlinien von Verbrennungskraftmaschine und elektrischer Maschine unterscheiden sich deutlich. Wenn die hydrodynamische Komponente jedoch mit beiden Maschinen arbeiten soll, muss diese auch für beide Maschinen ausgelegt werden. Dies ist jedoch bei herkömmlichen Baugrößen und Bautypen sehr aufwändig.

Eine weitere Möglichkeit wäre der Einsatz der elektrischen Maschine an der Stelle des Wandlers. Dies wäre im Gegensatz zu den oben beschriebenen Fällen, bei denen zusätzlicher Bauraum benötigt wird, zwar bauraumneutral, schränkt die Funktionalität des Getriebes jedoch deutlich ein, insbesondere bei leerem Energiespeicher. Da über den Wandler bestimmte Anforderungen wie beispielsweise Anfahren an einer Steigung oder eine Kriechfahrt bergauf realisiert werden können, wird dies von der elektrischen Maschine analog gefordert. Dies ist jedoch, je nach Auslegung der elektrischen Maschine, schwierig bis unmöglich. Wenn zusätzlich nicht ausreichend gespeicherte elektrische Leistung zur Verfügung steht, kann die gewünschte Funktionalität gar nicht bereitgestellt werden.

Eine weitere Problematik von derartigen Aufbauten entsteht, wenn es um die Erfüllung einer Forderung nach einem Dauerbremsen, insbesondere nach einer verschleißfreien Dauerbremse, geht. Um diese Forderung über die elektrische Maschine im generatorischen Betrieb erfüllen zu können, ist insbesondere bei einem Nutzfahrzeug mit einem vergleichsweise hohen Gesamtgewicht die Abnahme einer sehr hohen elektrischen Leistung im Bremsbetrieb erforderlich. Dies führt im Allgemeinen zu einem deutlich überdimensionierten Speicher oder die Energie muss an Bremswiderständen in Wärme umgewandelt werden.
Im weiteren allgemeinen Stand der Technik ist aus der EP 2 025 550 A2 außerdem ein Anfahrelement für ein Kraftfahrzeug bekannt, welches eine Anfahrkupplung zeigt, welche hydrodynamisch ausgebildet ist. Die Sekundärseite ist dabei mit einem Rotor drehfest verbunden, welcher über eine elektromagnetische Wechselwirkung mit einem Stator verbunden ist. Damit lässt sich über die so ausgebildete elektrische Maschine eine Bremseinrichtung für die Sekundärseite der hydrodynamischen Kupplung schaffen. Allerdings ist hier über die drehfeste Verbindung zwischen der elektrischen Maschine und der Sekundärseite des hydrodynamischen Anfahrelements eine deutliche Einschränkung gegeben, da beispielsweise über die elektrische Maschine in solchen Fällen über den hydrodynamischen Kreislauf die stehende Verbrennungskraftmaschine mit angetrieben werden müsste. Dies führt insbesondere bei höheren Drehzahlen zu Schleppverlusten.

Zum nächstliegenden Stand der Technik wird auf die gattungsbildende deutsche Offenlegungsschrift DE 10 2008 015 226 A1 verwiesen.

Zum weiteren Stand der Technik wird außerdem auf die DE 10 2007 004 462 A1, die US 3,625,323 A, die DE 102 19 080 A, die JP 2003 220 842 A sowie die US 2009/283 344 A1 verwiesen.

Aufgabe der hier vorliegenden Erfindung ist es nun, einen Antriebsstrang für ein Kraftfahrzeug zu schaffen, welcher die oben genannten Probleme vermeidet und dennoch eine wirksame Hybridisierung mit einem primären Antriebsaggregat und einer elektrischen Maschine ermöglicht.

Erfindungsgemäß wird diese Aufgabe durch die Merkmale im kennzeichnenden Teil des Anspruchs 1 gelöst. Weitere vorteilhafte Ausgestaltungen des erfindungsgemäßen Antriebsstrangs ergeben sich dabei aus den abhängigen Unteransprüchen. Eine bevorzugte Verwendung für den erfindungsgemäßen Antriebsstrang ist in Anspruch 14 angegeben.

Der erfindungsgemäße Aufbau sieht es nun vor, dass ein Anfahrelement vorhanden ist, welches wenigstens eine Kupplung umfasst. Dieses Anfahrelement ist im Leistungsfluss - dessen Richtung hier den Antriebsfall widerspiegelt - zwischen dem primären Antriebsaggregat und einem Lastschaltgetriebe angeordnet. Dies entspricht soweit dem Aufbau gemäß dem Stand der Technik. Die elektrische Maschine wird nun gemäß der Erfindung in dem Leistungsfluss zwischen dem Anfahrelement und dem Lastschaltgetriebe angeordnet. Die elektrische Maschine ist dabei also mit der beziehungsweise den Eingangswellen des Lastschaltgetriebes verbunden. Dadurch kann über die elektrische Maschine und das Lastschaltgetriebe das Fahrzeug angetrieben werden, ohne dass das in diesem Fall stehende primäre Antriebsaggregat, welches insbesondere als Verbrennungskraftmaschine ausgebildet sein kann, mitbewegt werden muss. Dies ist von entscheidendem Vorteil für den Wirkungsgrad beim rein elektrischen Antrieb. Aufgrund der Anordnung der elektrischen Maschine vor dem Lastschaltgetriebe kann diese mit einem entsprechend engen Drehzahl- und/oder Drehmomentbereich konzipiert werden, sodass bei kleinem Bauraum und vergleichsweise kleiner benötigter Lastspreizung eine sehr kompakte und hocheffiziente Elektromaschine eingesetzt werden kann.

Bei speziellen Betriebsarten, wie beispielsweise einem Start-/Stoppbetrieb, also dem Abstellen des primären Antriebsaggregats bei vorübergehendem Fahrzeugstillstand, beispielsweise an einer roten Ampel oder dergleichen, kann das primäre Antriebsaggregat so problemlos abgestellt werden. Bereits das Wiederanfahren kann, zumindest in der Anfangsphase, dann ausschließlich über die elektrische Maschine erfolgen, ohne das primäre Antriebsaggregat schleppen zu müssen. Auch langsame Fahrten, beispielsweise durch verkehrsberuhigte Bereiche oder langsame Bergabfahrten, können über die Elektromaschine alleine realisiert werden, sodass das primäre Antriebsaggregat, zum Beispiel eine Verbrennungskraftmaschine, im Stoppmodus bleiben kann und somit keine Energie benötigt und keine Emissionen verursacht. Ein Wiederanlassen ist erst dann notwendig, wenn die Energiespeicher für die elektrische Maschine leer werden, oder wenn eine Leistung beziehungsweise ein Drehmoment benötigt wird, welches durch die elektrische Maschine (alleine) nicht bereitgestellt werden kann. In diesem Fall kann dann das primäre Antriebsaggregat wieder zugeschaltet werden. Dieser Aufbau hat den entscheidenden Vorteil, dass Abgasemissionen und Geräuschemissionen durch den Betrieb des primären Antriebsaggregats im Niedriglastbereich vermieden beziehungsweise deutlich reduziert werden.

Der Antriebsstrang mit der Hybridisierung durch die erfindungsgemäße Einbindung der elektrischen Maschine erlaubt dabei eine sehr freie Anpassung der Größe der elektrischen Maschine. Dadurch ist es möglich, den Antriebsstrang als Mikro-, Mild- oder Vollhybrid auszulegen.

In bestimmten Zuständen reicht die Speicherkapazität nun nicht aus, sodass durch die elektrische Maschine kein ausreichendes Bremsmoment aufgebracht werden kann. In diesem Fall kann durch wenigstens einen Retarder im Leistungsfluss vor und/oder nach dem Lastschaltgetriebe zusätzlich zur elektrischen Maschine ein Bremsmoment aufgebracht. Als Retarder kann dabei ein Primärretarder, ein Sekundärretarder und/oder eine Verwendung einer hydrodynamischen Kupplung als Retarder dienen.

In einer günstigen Ausgestaltung des erfindungsgemäßen Antriebsstrangs ist es dabei vorgesehen, dass das Anfahrelement als hydrodynamisches Element ausgebildet ist. Ein solches hydrodynamisches Element, für welches eine Vielzahl von verschiedenen Bauarten, beispielsweise als Wandler, als Kupplung mit geregelter oder konstanter Füllung, als dauergefüllte hydrodynamische Kupplung mit Drosselelement oder Ähnliches möglich sind, erlaubt es, trotz der oft sehr hohen Drehmomente, welche beispielsweise zum Anfahren eines Nutzfahrzeugs benötigt werden, verschleißfrei mit einem beeinflussbaren Übertragungsverhalten anzufahren.

Gemäß einer besonders günstigen und vorteilhaften Weiterbildung des erfindungsgemäßen Antriebsstrangs ist es außerdem vorgesehen, dass das hydrodynamische Element in Richtung des Leistungsflusses - dessen Richtung für den vorliegenden Text weiterhin durch den Antriebsfall definiert sein soll - hinter dem Sekundärrad über einen Freilauf mit einer Eingangswelle des Lastschaltgetriebes verbunden ist. Durch diesen Aufbau mit dem Freilauf ist eine Umkehrung der Primär- und der Sekundärseite des hydrodynamischen Elements in dem Anfahrelement nicht mehr möglich.

Erfindungsgemäß ist das Sekundärrad des hydrodynamischen Elements, wenn dieses als Kupplung ausgebildet ist, über eine Bremseinrichtung festbremsbar. Damit lässt sich bei festgebremster Sekundärseite der hydrodynamischen Kupplung aufgrund des vorhandenen Freilaufs eine Krafteinleitung durch das Lastschaltgetriebe "rückwärts" realisieren, sodass die Leistung an der Primärseite der hydrodynamischen Kupplung anlangt. Damit wird eine verschleißfreie Dauerbremse realisiert, indem bei gefüllter hydrodynamischer Kupplung diese mit rotierendem Primärrad und festgebremstem Sekundärrad als hydrodynamischer Retarder genutzt wird. Da ein solcher Retarder dann auf der dem primären Antriebsaggregat zugewandten Seite des Lastschaltgetriebes angeordnet ist, wird dieser auch als Primärretarder bezeichnet. Zusätzlich zum Bremsen über die elektrische Maschine im generatorischen Betrieb kann also über die hydrodynamische Kupplung in ihrer Verwendung als hydrodynamischer Retarder verschleißfrei gebremst werden. Dies hat den entscheidenden Vorteil, dass beispielsweise bei vollem elektrischem Speicher - oder bei nicht ausreichender Leistungsabnahme zum Aufbringen des erforderlichen Bremsmoments an der elektrischen Maschine - mit dem Retarder zusätzlich gebremst werden kann. In diesem wird in an sich bekannter Art und Weise die eingebrachte Bremsleistung in Wärme in dem Arbeitsmedium umgewandelt und so über einen Kühlkreislauf oder dergleichen abgeführt. Dies ist sehr einfach, effizient und zuverlässig möglich.

In einer weiteren sehr vorteilhaften Ausgestaltung der Erfindung kann das Anfahrelement auch als Reibkupplung ausgebildet sein. Solche Reibkupplungen, welche bei geringen Leistungen und Drehmomenten als Trockenkupplungen ausgebildet sein können, und welche beispielsweise beim Einsatz in einem Nutzfahrzeug typischerweise als nasse Lamellenkupplung ausgebildet sein werden, können als Anfahrelement ebenfalls genutzt werden. Auch hier erschließt sich durch die erfindungsgemäße Anordnung und Einkopplung der elektrischen Maschine zwischen dem Anfahrelement und dem Lastschaltgetriebe ein hybridisierter Antriebsstrang mit den eingangs genannten Vorteilen.

Eine besonders günstige und vorteilhafte Verwendung des erfindungsgemäßen Antriebsstrangs ist dabei für den Einsatz in Nutzfahrzeugen gegeben. Der Antriebsstrang kann prinzipiell in allen Arten von gleislosen Kraftfahrzeugen oder auch schienengebundenen Fahrzeugen eingesetzt werden. Aufgrund der vergleichsweise hohen Masse von Nutzfahrzeugen, insbesondere im Vergleich zu Personenkraftwagen, kann der erfindungsgemäße Aufbau seine besonderen Vorteile bei der Nutzung von rekupierter Energie zum erneuten Beschleunigen ausspielen. Dies gilt vor allem bei Omnibussen, insbesondere bei Nahverkehrs-Omnibussen. Diese typischerweise im Nahverkehr eingesetzten Omnibusse bewegen sich sehr häufig nur für kurze Strecken von einer Haltestelle zur nächsten. Sie müssen daher besonders oft beschleunigen und wieder abbremsen, sodass hier der energetische und ökologische Vorteil des Hybridantriebs besonders gut genutzt werden kann. Aufgrund der Möglichkeit mit dem erfindungsgemäßen Antriebsstrang beispielsweise in verkehrsberuhigten Zonen oder dergleichen sehr energieeffizient zu fahren, ohne das primäre Antriebsaggregat, zum Beispiel eine Verbrennungskraftmaschine, mitschleppen zu müssen und ohne diese überhaupt betreiben zu müssen, entsteht hier ein besonderer Vorteil, da in diesen sensiblen Bereichen besonders wenig Emissionen an Lärm und Schadstoffen entstehen.

Weitere vorteilhafte Ausgestaltungen des erfindungsgemäßen Antriebsstrangs ergeben sich aus den restlichen abhängigen Unteransprüchen und werden anhand des Ausführungsbeispiels deutlich, welches nachfolgend unter Bezugnahme auf die Figuren näher erläutert wird.

Dabei zeigen:
- Figur 1: eine schematische Darstellung des Aufbaus des erfindungsgemäßen Antriebsstrangs;
- Figur 2: eine Detaildarstellung eines Ausschnitts einer ersten Ausführungsform des erfindungsgemäßen Antriebsstrangs in einem ersten Schaltzustand;
- Figur 3: eine Detaildarstellung eines Ausschnitts der ersten Ausführungsform des erfindungsgemäßen Antriebsstrangs in einem zweiten Schaltzustand;
- Figur 4: eine Detaildarstellung eines Ausschnitts der ersten Ausführungsform des erfindungsgemäßen Antriebsstrangs in einem dritten Schaltzustand;
- Figur 5: eine Detaildarstellung eines Ausschnitts der ersten Ausführungsform des erfindungsgemäßen Antriebsstrangs in einem vierten Schaltzustand;
- Figur 6: eine Detaildarstellung eines Ausschnitts der ersten Ausführungsform des erfindungsgemäßen Antriebsstrangs in einem fünften Schaltzustand;
- Figur 7: eine Detaildarstellung eines Ausschnitts der ersten Ausführungsform des erfindungsgemäßen Antriebsstrangs in einem sechsten Schaltzustand; und
- Figur 8: eine Detaildarstellung eines Ausschnitts der ersten Ausführungsform des erfindungsgemäßen Antriebsstrangs in einem siebten Schaltzustand.
- Figur 9: eine Detaildarstellung eines Ausschnitts einer zweiten Ausführungsform des erfindungsgemäßen Antriebsstrangs;
- Figur 10: eine Detaildarstellung eines Ausschnitts einer dritten Ausführungsform des erfindungsgemäßen Antriebsstrangs;
- Figur 11: eine Detaildarstellung eines Ausschnitts einer vierten Ausführungsform des erfindungsgemäßen Antriebsstrangs;
- Figur 12: eine Detaildarstellung eines Ausschnitts einer fünften Ausführungsform des erfindungsgemäßen Antriebsstrangs;
- Figur 13: eine Detaildarstellung eines Ausschnitts einer sechsten Ausführungsform des erfindungsgemäßen Antriebsstrangs;
- Figur 14: eine Detaildarstellung eines Ausschnitts einer siebten Ausführungsform des erfindungsgemäßen Antriebsstrangs;
- Figur 15: eine Detaildarstellung eines Ausschnitts einer achten Ausführungsform des erfindungsgemäßen Antriebsstrangs;
- Figur 16: eine Detaildarstellung eines Ausschnitts einer neunten Ausführungsform des erfindungsgemäßen Antriebsstrangs;
- Figur 17: eine Detaildarstellung eines Ausschnitts einer zehnten Ausführungsform des erfindungsgemäßen Antriebsstrangs; und
- Figur 18: eine Detaildarstellung eines Ausschnitts einer elften Ausführungsform des erfindungsgemäßen Antriebsstrangs.

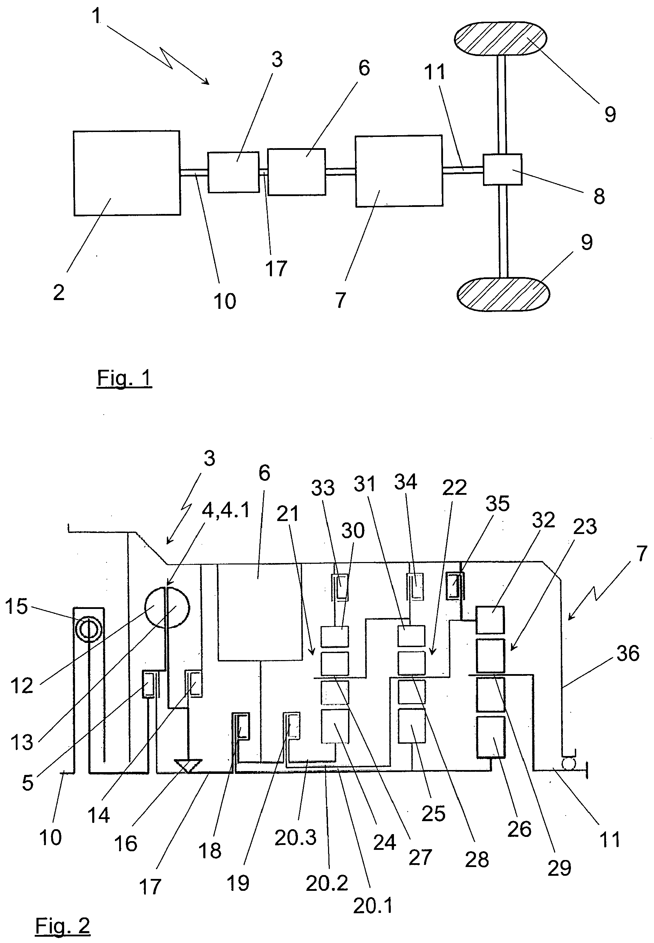

In Figur 1 ist eine prinzipmäßige Darstellung eines Antriebsstrangs 1 zu erkennen, wie er beispielsweise bei einem Nutzfahrzeug, insbesondere einem Omnibus für den städtischen Nahverkehr, zum Einsatz kommen kann. Ein primäres Antriebsaggregat 2 des Antriebsstrangs 1 soll hier beispielhaft als Verbrennungskraftmaschine, insbesondere als Dieselmotor, ausgebildet sein. Alternative Ausgestaltungen des primären Antriebsaggregats sind dabei jederzeit denkbar, beispielsweise der Einsatz von Gasturbinen, verschiedenen Motortypen oder ähnlichen Maschinen, welche eine mechanische Rotationsenergie bereitstellen.

In Richtung des Leistungsflusses in dem Antriebsstrang 1, welcher für die hier vorliegende Beschreibung in der beim Antrieb auftretenden Richtung definiert sein soll, folgt auf das primäre Antriebsaggregat 2 ein Anfahrelement 3, welches wenigstens eine Kupplung, z.B. eine später noch näher beschriebene Überbrückungskupplung 5 eine hydrodynamische Kupplung 4.1, 4.2, 4.3 und/oder eine mechanische Anfahrkupplung 43 umfasst. An das Anfahrelement 3 schließt sich dann in Richtung des Leistungsflusses eine elektrische Maschine 6 und an diese ein Lastschaltgetriebe 7 an. Der Abtrieb 11 des Lastschaltgetriebes 7 ist in der hier gewählten prinzipmäßigen und schematischen Darstellung des Antriebsstrangs 1 über ein weiteres Verteilergetriebe 8 beziehungsweise Differential mit Antriebsrädern 9 verbunden. Die Antriebsräder 9 sollen dabei zum Antrieb des mit dem Antriebsstrang 1 ausgestatteten Fahrzeugs, welches in seiner Gesamtheit nicht dargestellt ist, dienen. Die elektrische Maschine kann bevorzugt als permanenterregte Synchronmaschine (PSM) ausgebildet sein.

Der Aufbau des Antriebsstrangs 1 in der in Figur 1 dargestellten Art und Weise erlaubt besonders einfach und effizient den Einsatz einer kleinen und sehr effizienten elektrischen Maschine 6. Dadurch, dass diese zwischen dem Anfahrelement 3 und dem Lastschaltgetriebe 7 angeordnet ist, muss durch die elektrische Maschine 6 lediglich eine sehr geringe Spreizung ihres verfügbaren Drehmoments beziehungsweise Drehzahlbereichs gewährleistet werden, da anschließend eine entsprechende Übersetzung zu den an den Antriebsrädern 9 benötigten Drehzahlen beziehungsweise Drehmomenten über das Lastschaltgetriebe 7 erfolgt. Andererseits ist die elektrische Maschine 3 so zwischen dem Anfahrelement 3 und dem Lastschaltgetriebe 7 angeordnet, dass eine Entkopplung des primären Antriebsaggregats 2, hier also des Dieselmotors, von der elektrischen Maschine 6 realisiert werden kann, sodass bei einem Stillstand des Dieselmotors 2 durch den Betrieb der elektrischen Maschine 6 als Generator oder Motor keine Schleppverluste durch das gegebenenfalls notwendige Schleppen des Dieselmotors 2 verursacht werden. Der Aufbau ist daher außerordentlich kompakt zu realisieren und erlaubt einen sehr vorteilhaften und energieeffizienten Einsatz des hybridisierten Antriebsstrangs 1 in der eingangs beschriebenen Art und Weise.

In der Darstellung der Figuren 2 bis 8 ist nun ein beispielhafter Aufbau eines Ausschnitts aus einer ersten Ausführungsform eines solchen Antriebsstrangs 1 gezeigt, wobei von dem rotationssymmetrischen Aufbau lediglich der oberhalb der Rotationsachse liegende Teil dargestellt ist. Die Figuren 2 bis 8 geben dabei verschiedene Schaltzustände des Aufbaus wieder, welche nachfolgend erläutert werden, und dabei das Funktionsprinzip des Aufbaus verständlich machen.

In der Darstellung der Figur 2 ist das Anfahrelement 3, das Lastschaltgetriebe 7 und dazwischen die elektrische Maschine 6 zu erkennen. Eine Eingangswelle 10 in das Anfahrelement 3 ist in der in Figur 2 gewählten Darstellung links zu erkennen. Diese ist gleichzeitig die Abtriebswelle des primären Antriebsaggregats 2 oder ist direkt oder mittelbar mit dieser verbunden. Der in Figur 2 dargestellte Aufbau endet auf seiner rechten Seite mit einer Abtriebswelle 11 des Lastschaltgetriebes 7, welcher die Antriebsräder 9 direkt oder, wie in der Darstellung der Figur 1 angedeutet, über ein Verteilergetriebe 8 antreibt. In den Bereich des Anfahrelements 3 ist ein hydrodynamisches Element 4 zu erkennen. Das hydrodynamische Element 4 ist in der hier dargestellten Ausführungsform als hydrodynamische Kupplung 4.1 mit geregelter Füllung dargestellt. Mit den Bezugszeichen 4.1 soll nachfolgend immer eine derartige hydrodynamische Kupplung 4.1 mit geregelter Füllung bezeichnet werden. Diese stellt eine erste mögliche Ausgestaltung des hydrodynamischen Elements 4 dar. Die hydrodynamische Kupplung 4.1 besteht in an sich bekannter Art und Weise aus einem Primärrad 12 beziehungsweise primären Schaufelrad 12 und einem Sekundärrad beziehungsweise sekundären Schaufelrad 13. Im Betrieb der hydrodynamischen Kupplung 4.1 bildet sich zwischen diesen beiden Schaufelrädern 12, 13 in einem durch sie gebildeten Arbeitsraum eine Kreislaufströmung eines zur Kraftübertragung genutzten Arbeitsmediums aus, wie dies von hydraulischen Kupplungen 4.1 an sich bekannt und bei solchen üblich ist. Die hydrodynamische Kupplung 4.1 mit geregelter Füllung ist dabei so zu verstehen, dass das Volumen im Arbeitsmedium in dem Arbeitsraum entsprechend variiert beziehungsweise geregelt wird, um so die Kraftübertragung zu beeinflussen und das gewünschte Drehmoment mit der gewünschten Drehzahl sekundärseitig, also auf der dem Lastschaltgetriebe 7 zugewandten Seite der hydrodynamischen Kupplung 4.1, einzustellen.

In der Darstellung der Figur 2 ist außerdem eine Bremse 14 für das sekundäre Schaufelrad 13 zu erkennen, auf welche später noch näher eingegangen wird. Neben der hydrodynamischen Kupplung 4 weist das Anfahrelement 3 außerdem eine Überbrückungskupplung 5 auf, welche beispielsweise als Trockenkupplung in Form einer Scheibenkupplung realisiert sein kann. Ferner ist in der Darstellung der Figur 2 ein Dämpfungselement 15 zu erkennen, welches so als Drehschwingungsdämpfer bei Verbrennungskraftmaschinen als primärem Antriebsaggregat 2 an sich bekannt und üblich ist. Das sekundäre Schaufelrad 13 ist dann über einen Freilauf 16 mit einer Eingangswelle 17 des Lastschaltgetriebes 7 verbunden. Diese Eingangswelle 17 ist dann über zwei Kupplungen 18, 19 auf drei Eingänge 20.1, 20.2, 20.3 des Lastschaltgetriebes 7 aufgeteilt. Zwischen den beiden Kupplungen 18, 19 ist außerdem eine Verbindung mit der elektrischen Maschine 6 realisiert. Die elektrische Maschine 6 ist dann fest mit der Eingangswelle 17 und dementsprechend fest mit dem Eingang 20.3 verbunden. Die Verbindung der elektrischen Maschine 6 zu den Eingängen 20.1 und 20.2 erfolgt über die Kupplungen 18, 19. Im Lastschaltgetriebe 7 selbst sind hier beispielhaft drei Planetensätze 21, 22, 23 realisiert, von denen jeweils die Sonnen 24, 25, 26 einer der Planeten 27, 28, 29 und die Hohlräder beziehungsweise Außenräder 30, 31, 32 zu erkennen sind. Der Eingang 20.1 ist drehfest mit den Sonnen 25, 26 des zweiten und dritten Planetensatzes 22, 23 verbunden. Der Eingang 20.3 ist drehfest mit der Sonne 24 des ersten Planetensatzes 21 verbunden. Der dritte Eingang 20.2 ist mit dem Planeten 28 des zweiten Planetensatzes 22 beziehungsweise dessen Planetenträger verbunden. Außerdem sind die Planeten 27, 28 des ersten und zweiten Planetensatzes 21, 22 jeweils mit dem Außenrad 31, 32 des darauffolgenden Planetensatzes 22, 23 verbunden. Die Außenräder 30, 31, 32 sind außerdem jeweils einzeln über Bremsen 33, 34, 35 festbremsbar. Die Abtriebswelle 11 ist dann mit dem Planeten 29 des letzten Planetensatzes 23 beziehungsweise in der üblichen Art und Weise mit dem Planetenträger beziehungsweise Steg verbunden. Ein solches Lastschaltgetriebe 7 ist dabei an sich bekannt und im Stand der Technik üblich.

Der hier dargestellte und nachfolgend beschriebene Aufbau des Lastschaltgetriebes 7, welches häufig nach seinem Erfinder als "Polak-Struktur" bezeichnet wird, ist rein beispielhaft zu verstehen, da der Kern der Erfindung in der Anordnung der elektrischen Maschine 6 zwischen dem Anfahrelement 3 und dem Lastschaltgetriebe 7 liegt. Daher kann das Lastschaltgetriebe 7 durchaus auch in anderer bekannter und üblicher Art aufgebaut sein, ohne dass der Umfang der hier vorliegenden Erfindung dadurch verlassen wird. Der gesamte hier gezeigte Aufbau ist dabei in einem Gehäuse 36 angeordnet. An dieses kann sich auf der Seite der Eingangswelle 10 unmittelbar das primäre Antriebsaggregat 2 anschließen beziehungsweise an dem Gehäuse 36 angeflanscht sein.

In der Darstellung der Figur 2 ist nun anhand der fett dargestellten Linien der Leistungsfluss in einem ersten Schaltzustand, hier dem ersten Gang, beim Anfahren mit dem Anfahrelement 3 dargestellt. Die Überbrückungskupplung 5 ist dazu geöffnet, ebenso die Bremsen 14, 33 und 34 sowie die Kupplung 19. Bei geschlossener Kupplung 18 und geschlossener Bremse 35 für das Außenrad 32 des dritten Planetensatzes 23 ergibt sich so ein Leistungsfluss von der Eingangswelle 10 auf das primäre Schaufelrad 12 und durch den hydrodynamischen Kreislauf in an sich bekannter Art und Weise auf das sekundäre Schaufelrad 13. Dieses überträgt die Leistung dann über den Freilauf 16 und die Eingangswelle 17 sowie die geschlossene Kupplung 18 auf den Eingang 20.1 des Lastschaltgetriebes 7. Von dort wird über die Sonne 26 des dritten Planetensatzes 23 bei über die Bremse 35 festgebremstem Außenkranz 32 dieses Planetensatzes 23 die Abtriebswelle 11 über den Planeten 29 dieses Planetensatzes 23 angetrieben.

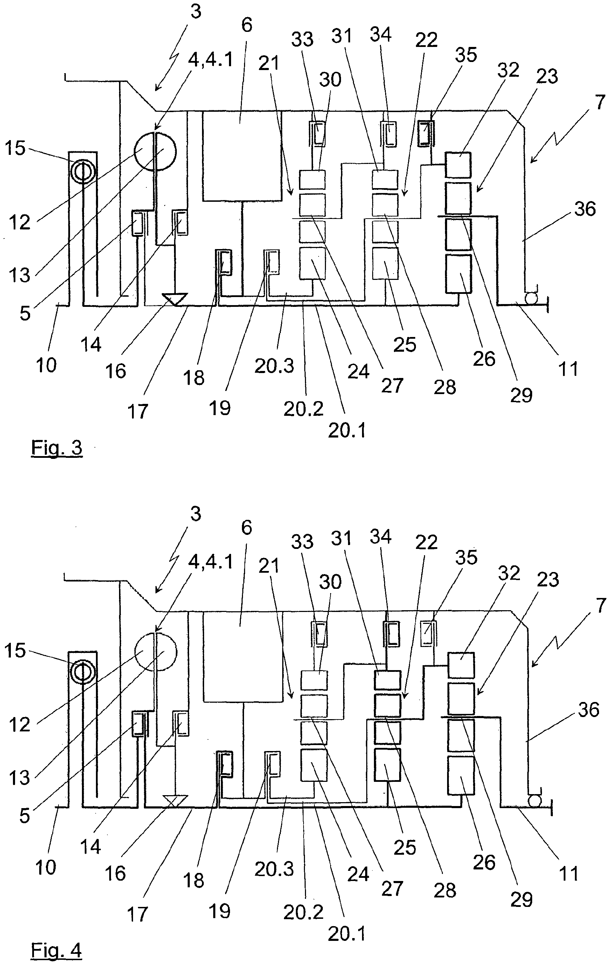

Der in Figur 3 dargestellte Aufbau stellt ebenfalls den ersten Gang dar und beschreibt hier ein kombiniertes Anfahren über die hydrodynamische Kupplung 4.1, wie im Rahmen der Figur 2 beschrieben einerseits und die elektrische Maschine 6 andererseits. Hierfür ist bei vergleichbarem Aufbau und vergleichbarer Konstellation der Bremsen und Kupplungen, wie in Figur 2 erläutert, zusätzlich über die Kupplung 18 neben einer Verbindung des Eingangs 20.1 mit der Eingangswelle 17 eine Verbindung zur elektrischen Maschine 6 mit hergestellt, welche in diesem Fall motorisch arbeitet und das Anfahren entsprechend unterstützt.

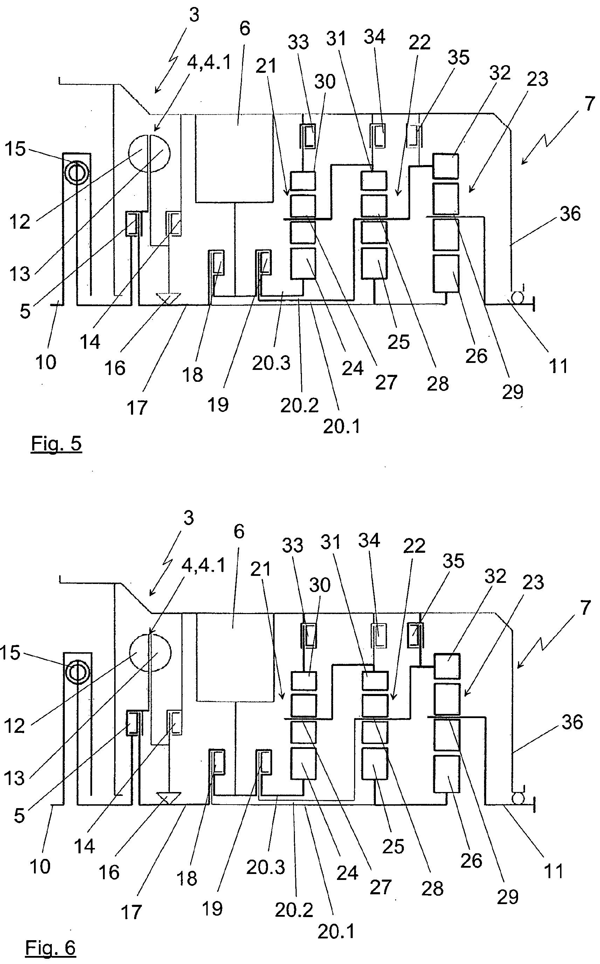

In der Darstellung der Figuren 4 und 5 sind beispielhaft Schaltzustände für zwei beliebig ausgewählte Vorwärtsgänge, in diesem Fall den zweiten Gang in der Darstellung der Figur 4 und den fünften Gang in der Darstellung der Figur 5, ausgewählt. Bei diesem Aufbau ist die Überbrückungskupplung 5 entsprechend geschlossen. Die hydrodynamische Kupplung 4.1 ist somit nicht in Betrieb, sondern wird umgangen. Für den zweiten Gang ist bei geschlossener Kupplung 18 die Bremse 34 geschlossen, während die Bremsen 33, 35 und 14 ebenso wie die Kupplung 19 geöffnet sind. Dies ergibt einen fett dargestellten Leistungsfluss von der Eingangswelle 17 über die Kupplung 18 und den Eingang 20.1 des Lastschaltgetriebes 7 auf die beiden Planetensätze 22 und 23 mit den in der Darstellung der Figur 4 gezeigten Zuständen. Eine entsprechende Drehzahl stellt sich an der Abtriebswelle 11 des Lastschaltgetriebes 7 ein. In der Darstellung der Figur 5 ist ein vergleichbarer Aufbau für den fünften Gang gezeigt. Dieser unterscheidet sich lediglich durch die Ansteuerung der einzelnen Bremsen und Kupplungen als Schaltelemente. So ist hier die Kupplung 19 geschlossen bei gleichzeitig geschlossener Bremse 33, während die Bremsen 34, 35 und 14 ebenso wie die Kupplung 18 geöffnet sind. Nach wie vor ist, wenn nicht angefahren wird, die Überbrückungskupplung 5 entsprechend geschlossen und die hydrodynamische Kupplung 4 somit außer Betrieb. Der Leistungsfluss erfolgt hier nun über die beiden Eingänge 20.2 und 20.3 in der durch die fetten Linien in der Darstellung der Figur 5 erkennbaren Art und Weise.

In der Darstellung der Figur 6 ist dann der Rückwärtsgang dargestellt. Bei gleichzeitig geschlossener Bremse 33 und 35 und offenen Kupplungen 18 und 19 ergibt sich der durch die fetten Linien dargestellte Leistungsfluss, welcher eine entsprechende Drehrichtungsumkehr in dem Lastschaltgetriebe 7 umfasst. In der Figur 6 ist dabei der Rückwärtsgang mit geschlossener Überbrückungskupplung 5 dargestellt, also in einem Zustand wie er typischerweise nach dem Anfahren im Rückwärtsgang während der eigentlichen Rückwärtsgang-Fahrt auftritt. Beim Anfahren auch im Rückwärtsgang wird analog zum Anfahren im Vorwärtsgang die hydrodynamische Kupplung entsprechend eingesetzt.

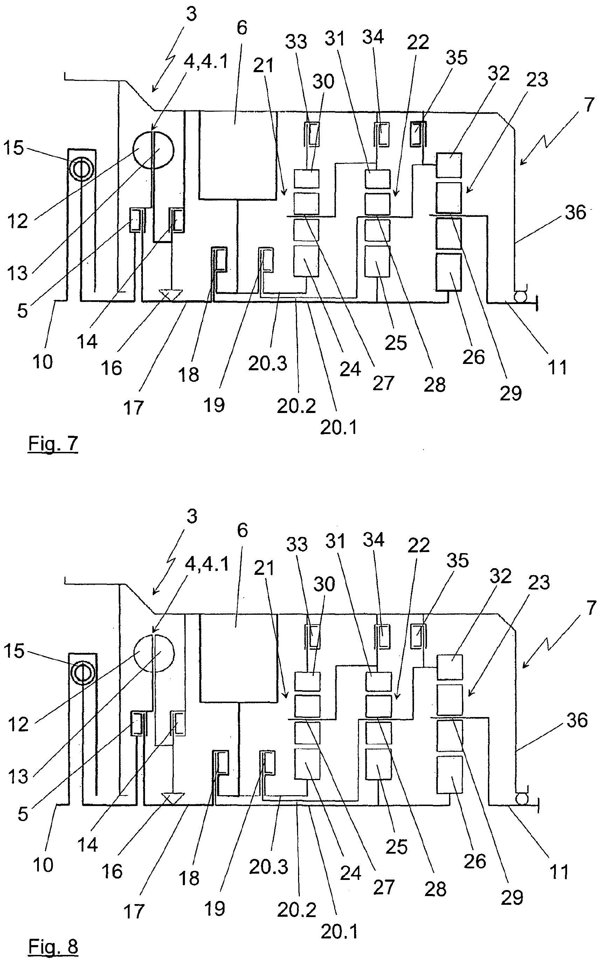

In der Darstellung der Figur 7 ist nun ein weiteres Ausführungsbeispiel für einen möglichen Schaltzustand des erfindungsgemäßen Antriebsstrangs dargestellt. Der Leistungsfluss ist dabei entsprechend umgekehrt, da es sich hier um ein Abbremsen des Fahrzeugs, also ein Abbremsen der Abtriebswelle 11 des Lastschaltgetriebes 7 handelt. Bei diesem Zustand entspricht der Schaltzustand wiederum dem des ersten Ganges, wie er oben beschrieben wurde. Über den dritten Planetensatz 23 und den Eingang 20.1 des Lastschaltgetriebes7 fließt nun rückwärts eine Leistung von der Abtriebswelle 11 in Richtung der Kupplung 18, welche den Eingang 20.1 des Lastschaltgetriebes7 mit der elektrischen Maschine 6 einerseits und der Eingangswelle 17 andererseits verbindet. Die elektrische Maschine 6 kann in diesem Zustand generatorisch mittelbar durch die Abtriebswelle des Lastschaltgetriebes 7 angetrieben werden. Je nach Strom, welcher der elektrischen Maschine 6 entnommen wird, kann so ein entsprechendes Bremsmoment aufgebaut werden. Bei ausreichender Speicherkapazität lässt sich so beim Abbremsen des Fahrzeugs Energie zurückgewinnen (die sogenannte Rekuperation), um diese später beispielsweise zum Wiederanfahren nutzen zu können.

In bestimmten Zuständen reicht die Speicherkapazität nun nicht aus, sodass durch die elektrische Maschine 6 kein ausreichendes Bremsmoment aufgebracht werden kann. In diesem Fall kann durch den Antrieb der Eingangswelle 17 über die Abtriebswelle 11 und dadurch, dass der Freilauf 16 einen unmittelbaren Antrieb des sekundären Schaufelrads 13 verhindert, über die Überbrückungskupplung 5 das primäre Schaufelrad 12 mit angetrieben werden. Bei geschlossener Bremse 14 ist dabei das sekundäre Schaufelrad 13 festgebremst. Bei rotierendem primären Schaufelrad 12 und mit Arbeitsmedium gefüllter hydrodynamischen Kupplung 4.1 ergibt sich so die Funktionalität eines Retarders, sodass durch die Verwirbelung des Arbeitsmediums zwischen dem rotierenden primären Schaufelrad 12 und dem festgebremsten sekundären Schaufelrad ein entsprechendes Verlustleistungsmoment entsteht, welches in dem Arbeitsmedium zu Wärme umgesetzt wird. Diese Wärme wird in an sich bekannter Art und Weise über ein Kühlsystem abgeführt oder ein flüssiges Medium des Kühlkreislaufs wird unmittelbar als Arbeitsmedium für den Retarder eingesetzt. Der Retarder kann also zusätzlich zur elektrischen Maschine 6 ein Bremsmoment aufbringen, wie dies von an sich bekannten Aufbauten mit Retardern bekannt und üblich ist.

In der Darstellung der Figur 8 ist nun außerdem eine Leerlaufsituation gezeigt, bei der das Lastschaltgetriebe 7 nicht angetrieben und damit die Abtriebswelle 11 des Lastschaltgetriebes 7 ebenfalls nicht angetrieben wird. Dennoch kann über die Überbrückungskupplung 5 eine Verbindung zwischen der elektrischen Maschine 6 und der Eingangswelle 10 und damit dem primären Antriebsaggregat 2, welches in dieser Figur nicht dargestellt ist, hergestellt werden. Dies kann beispielsweise genutzt werden, um die elektrische Maschine 6 generatorisch anzutreiben, beispielsweise für eine Standstromversorgung des Fahrzeugs oder ähnliches. Im Umkehrschluss kann außerdem in analoger Art und Weise durch ein Öffnen der Überbrückungskupplung 5 die elektrische Maschine 6 von dem primären Antriebsaggregat 2 und dem Anfahrelement 3 entkoppelt werden, sodass ein rein elektrischer Betrieb des mit Antriebsstrangs 1 der elektrischen Maschine 6 und dem Lastschaltgetriebe 7 ebenfalls möglich ist, ohne dass die hydrodynamische Kupplung 4.1 und/oder das primäre Antriebsaggregat 2 mitgeschleppt werden müssten.

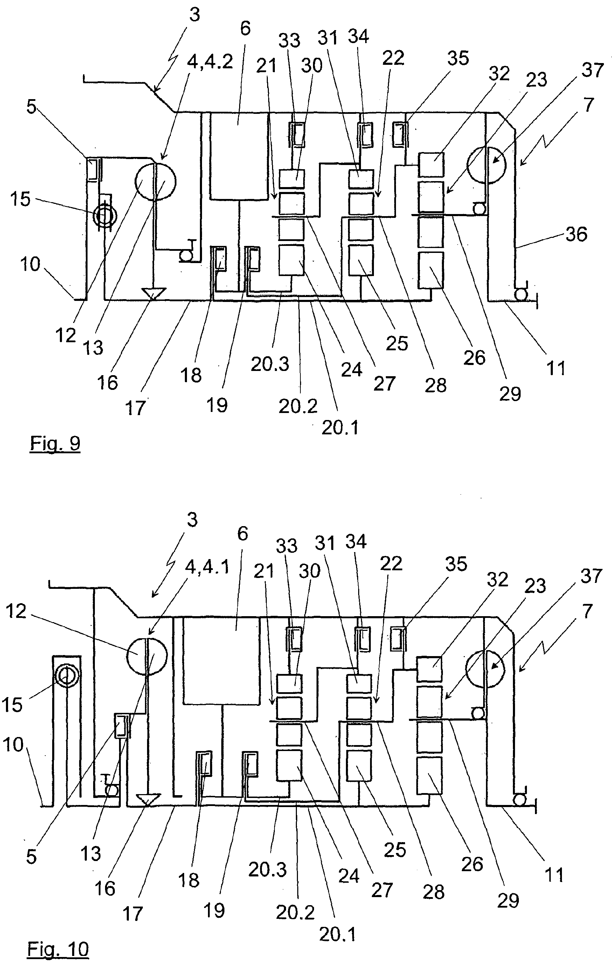

In der Darstellung der Figur 9 ist eine zweite Ausführungsform des Antriebsstrangs 1 in einer den Figuren 2 bis 8 vergleichbaren Art gezeigt. Da die unterschiedlichen Gangstufen und Fahrzustände analog dem in den Figuren 2 bis 8 beschriebenen Aufbau realisiert werden können, sind in den Figuren 9 bis 18 lediglich die Strukturen der Aufbauten verschiedener möglicher Ausführungsformen des Antriebsstrangs 1 dargestellt, ohne dass die Strichstärke der Linien einen Leistungsfluss symbolisiert, so wie dies bei den Figuren 2 bis 8 der Fall war.

Bei dem in Figur 9 dargestellten Aufbau ist das hydraulische Element 4 ebenfalls als hydrodynamische Kupplung ausgebildet, diese ist mit rotierendem Gehäuse ausgebildet und als hydrodynamische Kupplung 4.2 mit konstanter Füllung vorgesehen. Die hydrodynamische Kupplung 4.2 mit konstanter Füllung ist dabei in ihrem Funktionsprinzip so zu verstehen, dass diese mit einem konstanten Füllungsgrad immer gefüllt ist. Dadurch, dass im Nichtbetrieb der hydrodynamischen Kupplung 4.2 die Überbrückungskupplung 5 geschlossen ist und die Bauteile daher mit gleicher Drehzahl umlaufen, ist die ständig gefüllte hydrodynamische Kupplung 4.2 hinsichtlich Ventilationsverlusten unkritisch. Ansonsten entspricht der Aufbau weitgehend dem oben bereits beschriebenen Aufbau. Zusätzlich ist zwischen dem Planeten beziehungsweise Planetenträger 29 des dritten Planetensatzes 23 und dem Abtrieb 11 eine Sekundärretarder 37 vorgesehen, welcher in an sich bekannter Art und Weise als verschleißfreie Dauerbremse genutzt wird. Dies ist insbesondere bei dem in Figur 9 dargestellten Ausführungsbeispiel sinnvoll, da hier die hydrodynamische Kupplung 4.2, anders als die hydrodynamische Kupplung 4.1 zusammen mit der Bremse 14 nicht so verschaltet werden kann, dass diese als Primärretarder eingesetzt werden kann.

In der Darstellung der Figur 10 ist ein sehr ähnlicher Aufbau zu dem in Figur 9 dargestellten Aufbau zu erkennen. Der einzige Unterschied ist hier der, dass ein Gehäuse der hydrodynamischen Kupplung 4.2 gegenüber dem Gehäuse 36 feststehend ausgebildet ist, während dies in der Darstellung der Figur 9 umlaufend ausgebildet war. Auch die in Figur 10 dargestellte Variante der hydrodynamischen Kupplung 4.2 mit stehendem Gehäuse wird dabei nur in im ersten Gang und im Rückwärtsgang gefüllt. Dadurch lassen sich die Ventilationsverluste im Bereich der hydrodynamischen Kupplung 4.2 minimieren. Die Kennlinie der Kupplung muss dabei jeweils an das verwendete primäre Antriebsaggregat 2 angepasst werden.

Die Steuerung des Anfahrvorgangs über die hydrodynamische Kupplung 4.2 gemäß den Figuren 9 und 10 erfolgt dann ausschließlich über die Stellung des Lastgebers des primären Antriebsaggregats. Die Drehzahlen und die Drehmomentaufnahme zwischen der Primärseite 12 und der Sekundärseite 13 der hydrodynamischen Kupplung 4.2 ergeben sich dabei aus den Kennlinien sowohl der hydrodynamischen Kupplung 4.2 als auch des primären Antriebsaggregats 2.

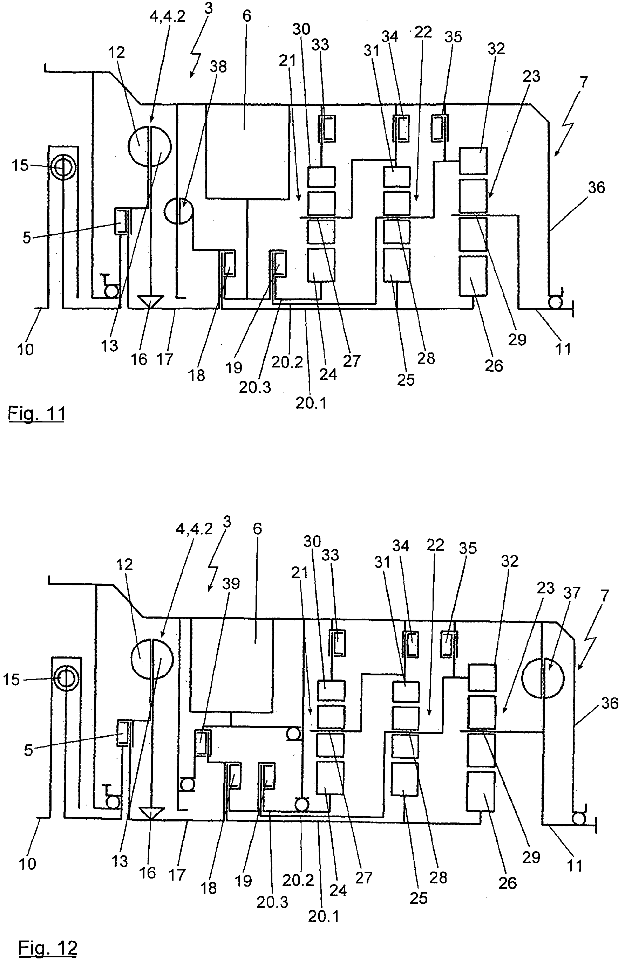

Die Darstellung der Figur 11 greift den in Figur 10 dargestellten Aufbau erneut auf. Anstelle des Sekundärretarders 37 ist hier ein Primärretarder 38 im Leistungsfluss auf der dem primären Antriebsaggregat 2 zugewandten Seite des Lastschaltgetriebes 7 angeordnet. Auf den zuvor beschriebenen Sekundärretarder 37 kann dann verzichtet werden.

Auch die in Figur 12 gezeigte Ausführungsform des Antriebsstrangs 1 greift nochmals die bereits im Rahmen der Figur 10 erläuterte Ausführungsform auf. Zusätzlich ist hier über eine weitere Kupplung 39 die Möglichkeit gegeben, die elektrische Maschine 6 bedarfsweise in den Leistungsfluss einzukuppeln oder bei Bedarf auch aus diesem herauszunehmen. Dies kann für bestimmte Konstellationen sinnvoll sein. Diese Vorteile sind bei der Konstruktion jedoch sorgfältig abzuwägen, da durch die weitere Kupplung 39 selbstverständlich ein zusätzlicher Bedarf an Bauraum und Bauelementen entsteht.

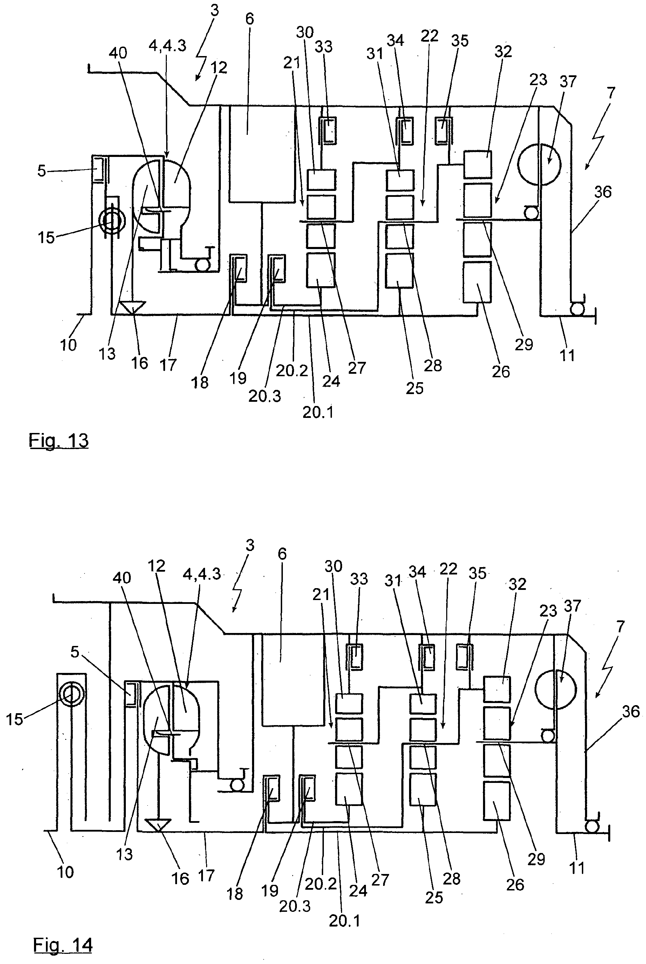

In der Darstellung der Figur 13 wird wiederum auf den im Rahmen der Figur 9 erläuterten Aufbau zurückgegriffen. Anstelle der hydrodynamischen Kupplung 4.2 mit konstanter Füllung ist hier als hydrodynamisches Element 4 eine dauergefüllte hydrodynamische Kupplung 4.3 zu erkennen. Diese dauergefüllte hydrodynamische Kupplung 4.3 weist ein verschiebliches Drosselelement 40 auf, welches so in der Kreislaufströmung verschoben werden kann, dass die Leistungsaufnahme durch das verschiebliche Drosselelement 40 variiert werden kann. Die Leistungsaufnahme wird hier also über das Drosselelement 40 geregelt. Dadurch kann das primäre Antriebsaggregat 2, beispielsweise eine Verbrennungskraftmaschine, beim Hochlaufen entlastet und bei konstanter Belastung gedrückt werden. Das Zusammenwirken von primärem Antriebsaggregat und hydrodynamischer Kupplung 4.3 kann so in weiten Grenzen beeinflusst werden. Die Abstimmung zwischen dem primären Antriebsaggregat und dem Lastschaltgetriebe 7 erfolgt hier also nicht über verschiedene Kupplungsvarianten, sondern über die Steuerung des verschieblichen Drosselelements 40. Dies hat den Vorteil, dass das primäre Antriebsaggregat 2 bei dieser Ausführungsform gezielt in bestimmten Betriebsbereichen geführt werden kann. Dadurch ist bei einem Anfahrvorgang eine Anpassung an das Kennfeld des primären Antriebsaggregats 2 möglich.

In der Darstellung der Figur 14 ist ein vergleichbarer Aufbau wie in der Darstellung der Figur 13 nochmals zu erkennen. Der einzige Unterschied besteht darin, dass ein Gehäuse der hydrodynamischen Kupplung 4.3, in dessen Bereich auch das verschiebliche Drosselelement 40 angeordnet ist, hier drehfest gegenüber dem Gehäuse 36 ausgebildet ist, während dies bei dem in der Figur 13 gezeigten Aufbau nicht der Fall war.

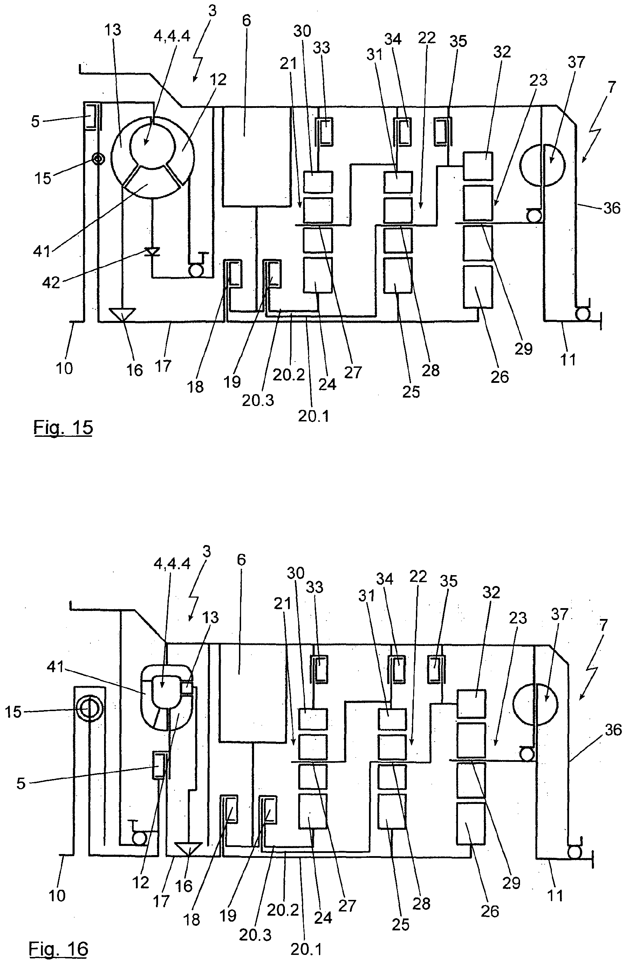

In der Darstellung der Figur 15 ist eine achte Ausführungsform des erfindungsgemäßen Antriebsstrangs 1 zu erkennen. Das hydrodynamische Element 4 ist in diesem achten Ausführungsbeispiel als hydrodynamischer Drehmomentwandler 4.4 ausgebildet. Dieser Drehmomentwandler 4.4 ist in der Darstellung der Figur 15 mit umlaufendem Gehäuse ausgebildet. Er weist neben der Primärseite 12, welche mit dem primären Antriebsaggregat 2 verbunden ist und bei einem Wandler typischerweise als Pumpe bezeichnet wird, und der Sekundärseite 13, welche über den Freilauf 16 mit dem Lastschaltgetriebe 7 verbunden ist und bei einem Wandler typischerweise als Turbine bezeichnet wird, außerdem ein Leitrad beziehungsweise einen Leitapparat 41 auf, welcher in dem hier dargestellten Ausführungsbeispiel über einen Freilauf 42 mit dem Gehäuse 36 verbunden ist. Der Freilauf 16 wirkt dabei als richtungsabhängige Kupplung und bewirkt, dass bei einem rein elektrischen Fahren die Sekundärseite 13 von der elektrischen Maschine 6 entkoppelt ist. Dadurch werden Ventilationsverluste bei stehendem primären Antriebsaggregat 2 vermieden. Die Kennlinie des hydrodynamischen Drehmomentwandlers 4.4 muss ebenfalls an das verwendete primäre Antriebsaggregat 2 angepasst werden. Eine Steuerung des Anfahrvorgangs erfolgt dann über die Stellung des Lastgebers des primären Antriebsaggregats. Die Drehzahl- und Drehmomentaufnahme der Primärseite 12 und der Sekundärseite 13 des Drehmomentwandlers 4.4 ergeben sich wiederum aus den Kennlinien des Drehmomentwandlers 4.4 und des primären Antriebsaggregats 2. Der Drehmomentwandler 4.4 hat als Anfahrelement dabei den Vorteil, dass die Erhöhung des Anfahrdrehmoments bei hohem Schlupf möglich wird.

Die Darstellung in Figur 16 beschreibt denselben Aufbau wie in der achten Ausführungsform in der Darstellung der Figur 15, wobei hier das Gehäuse des hydrodynamischen Drehmomentwandlers 4.4 drehfest mit dem Gehäuse 36 verbunden ist und daher auf den Freilauf 42 verzichtet werden kann. Das Leitrad 41 ist hier dann ebenfalls drehfest mit dem Gehäuse 36 verbunden. Die Turbine beziehungsweise Sekundärseite 13 ist wiederum in an sich bereits mehrfach beschriebener Art über den Freilauf 16 mit dem Lastschaltgetriebe 7 gekoppelt. Aufgrund des drehfest mit dem Gehäuse 36 verbundenen Gehäuses des hydrodynamischen Wandlers 4.4 wird auch hier, analog zur hydrodynamischen Kupplung 4.2 mit konstanter Füllung, eine Befüllung des hydrodynamischen Wandlers 4.4 mit Arbeitsmedium nur im ersten Gang und im Rückwärtsgang erfolgen, um in den anderen Gängen die auftretenden Ventilationsverluste im Bereich des hydrodynamischen Wandlers 4.4 zu minimieren. Auch für den rein elektrischen Antrieb bei stehendem primären Antriebsaggregat 2 muss zum Vermeiden von Ventilationsverlusten eine Entleerung erfolgen.

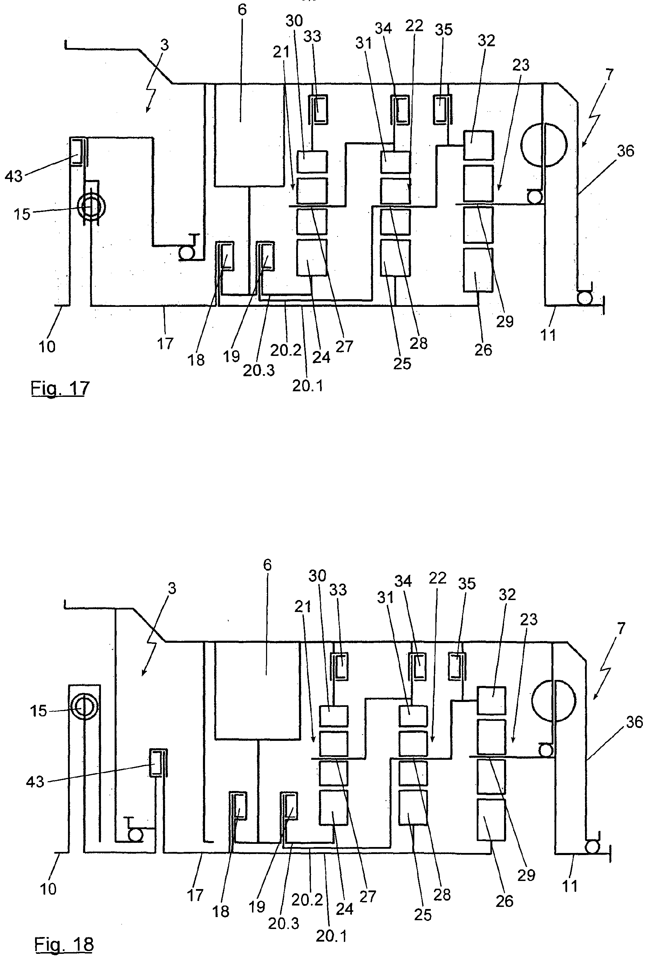

In der Darstellung der Figuren 17 und 18 sind nun eine zehnte und elfte Ausführungsform des erfindungsgemäßen Antriebsstrangs 1 zu erkennen. Diese beiden Ausführungsformen nutzen dabei kein hydrodynamisches Element 4 mit Überbrückungskupplung 5 im Bereich des Anfahrelements, sondern stattdessen eine Reibkupplung 43 im Bereich des Anfahrelements. Da der Antriebsstrang 1 wie bereits erwähnt am Beispiel eines Antriebsstrangs für ein Nutzfahrzeug beschrieben werden soll, sind die zum Anfahren erforderlichen Leistungen vergleichsweise hoch. Die Reibkupplung 43 des Anfahrelements 3 in der Ausführungsform gemäß den Figuren 17 und 18 soll dabei als Lamellenkupplung, insbesondere als nasse Lamellenkupplung, ausgebildet sein. Die Lamellenkupplung wird beispielsweise hydraulisch gesteuert, sodass das übertragene Drehmoment aufgrund dieser Steuerung entsprechend eingestellt werden kann. Der Aufbau wird dabei von Öl geschmiert und gekühlt, da durch die Übertragung in der Kupplung eine entsprechende hohe Wärmemenge anfällt. Der Aufbau des Antriebsstrangs 1 mit der Reibkupplung 43 in dem Anfahrelement 3 erlaubt es ebenfalls, das primäre Antriebsaggregat 2 in bestimmten Betriebsbereichen zu führen, da die Drehmomentaufnahme der Reibkupplung 43 durch einen Betätigungsdruck auf die einzelnen Lamellen derselben gesteuert werden kann. Der Aufbau der Reibkupplung 43 als nasse Lamellenkupplung hat dabei den Vorteil, dass weniger Bauteile benötigt werden. Allerdings ist die Anforderung an die Regelgüte für den Betätigungsdruck vergleichsweise hoch.

Die bisher beschriebenen Varianten sind dabei weitgehend mit dem Sekundärretarder 37 dargestellt. Dieser ist rein optional zu verstehen und kann beliebig durch den Primärretarder 38 ersetzt werden oder auch gänzlich weggelassen werden. Die Varianten sind dabei untereinander entsprechend kombinierbar, sodass beispielsweise die Ankupplung der elektrischen Maschine 6 über die weitere Kupplung 39 auch in allen Ausführungsformen, in denen sie nicht dargestellt ist, so mit verwendet werden könnte. Es besteht also entsprechend die Möglichkeit, den Rotor der elektrischen Maschine 6 separat zu lagern und die Verbindung der elektrischen Maschine zu der oder den Eingangswellen 20.1, 20.2, 20.3 des Lastschaltgetriebes 7 über die weitere Kupplung 39 auszuführen. Damit lassen sich Leerlaufverluste der elektrischen Maschine 6 deutlich reduzieren. Als bevorzugte Bauart für die Kupplung 39 lässt sich dabei eine Lamellenkupplung verwenden, welche beispielsweise "ungesteuert offen" oder "ungesteuert geschlossen" ausgeführt werden kann. Die Ausführung "ungesteuert geschlossen" hat dabei den Vorteil, dass die Betätigung der Kupplung 39 den Rotor der elektrischen Maschine 6 von den Eingängen 20.1, 20.2, 20.3 des Lastschaltgetriebes 7 trennt, sodass dieser zum Stillstand kommt. Dadurch entstehen in der Drehdurchführung des Drucköls zur Steuerung keine Leistungsverluste.

Neben der hier beschriebenen und gezeigten Ausführungsform der meisten Bremsen und Kupplungen als Lamellenkupplungen wäre es selbstverständlich auch denkbar, diese oder einen Teil derselben in Form von Klauenkupplungen auszuführen. Diese Klauenkupplungen, welche dann bei geringen Relativdrehzahlen direkt oder bei größeren Relativdrehzahlen über eine Synchronisationseinrichtung geschaltet werden könnten, bieten dabei den Vorteil, dass sie vergleichsweise einfach, leicht und kostengünstig auszuführen sind.

## Patentansprüche

1. Antriebsstrang für ein Kraftfahrzeug, mit
1.1 einem primären Antriebsaggregat,
1.2 einem Lastschaltgetriebe, welches in Richtung des Leistungsflusses nach dem primären Antriebsaggregat angeordnet ist,
1.3 einem Anfahrelement, welche im Leistungsfluss zwischen dem primären Antriebsaggregat und dem Lastschaltgetriebe angeordnet ist, und welches wenigstens eine Kupplung umfasst,
1.4 einer elektrischen Maschine, welche im Leistungsfluss zwischen dem Anfahrelement (3) und dem Lastschaltgetriebe (7) angeordnet ist, **dadurch gekennzeichnet, dass**
1.5 im Leistungsfluss vor und/oder nach dem Lastschaltgetriebe (7) wenigstens ein Retarder (4, 37, 39) angeordnet ist.

2. Antriebsstrang nach Anspruch 1, **dadurch gekennzeichnet, dass** die elektrische Maschine (6) mit einer Eingangswelle (17) des Lastschaltgetriebes (7) verbunden ist.

3. Antriebsstrang nach Anspruch 1 oder 2, **dadurch gekennzeichnet, dass** das Anfahrelement (3) ein hydrodynamisches Element (4) aufweist.

4. Antriebsstrang nach Anspruch 3, **dadurch gekennzeichnet, dass** das Anfahrelement (3) eine mechanische Überbrückungskupplung (5) für das hydrodynamische Element (4) aufweist.

5. Antriebsstrang nach Anspruche 4, **dadurch gekennzeichnet, dass** die Überbrückungskupplung (5) als Trockenkupplung ausgebildet ist.

6. Antriebsstrang nach Anspruch 3, 4 oder 5, **dadurch gekennzeichnet, dass** das hydrodynamische Element (4) als hydrodynamische Kupplung (4.2) mit konstanter Füllung ausgebildet ist.

7. Antriebsstrang nach Anspruch 3, 4 oder 5, **dadurch gekennzeichnet, dass** das hydrodynamische Element (4) als dauergefüllte hydrodynamische Kupplung (4.3) mit verschieblichem Drosselring (40) ausgebildet ist.

8. Antriebsstrang nach Anspruch 3, 4 oder 5, **dadurch gekennzeichnet, dass** das hydrodynamische Element (4) als hydrodynamischer Wandler (4.4) ausgebildet ist.

9. Antriebsstrang nach Anspruch 3, 4 oder 5, **dadurch gekennzeichnet, dass** das hydrodynamische Element (4) als hydrodynamische Kupplung (4.1) mit geregelter Füllung ausgebildet ist.

10. Antriebsstrang nach einem der Ansprüche 6 bis 9, **dadurch gekennzeichnet, dass** ein Sekundärrad (13) des hydrodynamischen Elements (4) über einen Freilauf (16) mit einer Eingangswelle (17) des Lastschaltgetriebes (3) verbunden ist.

11. Antriebsstrang nach Anspruch 9 und 10, **dadurch gekennzeichnet, dass** das Sekundärrad (13) der hydrodynamischen Kupplung (4.1) über eine Bremseinrichtung (14) festbremsbar ist.

12. Antriebsstrang nach Anspruch 1 oder 2, **dadurch gekennzeichnet, dass** das Anfahrelement (3) als Reibkupplung (43) ausgebildet ist.

13. Antriebsstrang nach Anspruch 12, **dadurch gekennzeichnet, dass** die Reibkupplung (43) als nasse Lamellenkupplung ausgebildet ist.

14. Verwendung eines Antriebsstrangs nach einem der Ansprüche 1 bis 13 für den Antrieb eines Nutzfahrzeugs, insbesondere eines Omnibus oder als Nahverkehrs-Omnibus ist.

## Claims

1. Drive train for a motor vehicle, having
1.1 a primary drive unit,
1.2 a power gearbox which is arranged downstream of the primary drive unit in the direction of the power flow,
1.3 a starting element which is arranged in the power flow between the primary drive unit and the power gearbox, and which comprises at least one clutch, 1.4 an electric machine which is arranged in the power flow between the starting element (3) and the power gearbox (7),
**characterized in that**
1.5 at least one retarder (4, 37, 39) is arranged in the power flow upstream and/or downstream of the power gearbox (7).

2. Drive train according to Claim 1, **characterized in that** the electric machine (6) is connected to an input shaft (17) of the power gearbox (7).

3. Drive train according to Claim 1 or 2, **characterized in that** the starting element (3) has a hydrodynamic element (4).

4. Drive train according to Claim 3, **characterized in that** the starting element (3) has a mechanical lock-up clutch (5) for the hydrodynamic element (4).

5. Drive train according to Claim 4, **characterized in that** the lock-up clutch (5) is configured as a dry clutch.

6. Drive train according to Claim 3, 4 or 5, **characterized in that** the hydrodynamic element (4) is configured as a hydrodynamic clutch (4.2) with a constant filling.

7. Drive train according to Claim 3, 4 or 5, **characterized in that** the hydrodynamic element (4) is configured as a permanently filled hydrodynamic clutch (4.3) with a displaceable throttle ring (40).

8. Drive train according to Claim 3, 4 or 5, **characterized in that** the hydrodynamic element (4) is configured as a hydrodynamic converter (4.4).

9. Drive train according to Claim 3, 4 or 5, **characterized in that** the hydrodynamic element (4) is configured as a hydrodynamic clutch (4.1) with a regulated filling.

10. Drive train according to one of Claims 6 to 9, **characterized in that** a secondary wheel (13) of the hydrodynamic element (4) is connected via a freewheel (16) to an input shaft (17) of the power gearbox (3).

11. Drive train according to Claims 9 and 10, **characterized in that** the secondary wheel (13) of the hydrodynamic clutch (4.1) can be braked fixedly via a braking device (14).

12. Drive train according to Claim 1 or 2, **characterized in that** the starting element (3) is configured as a friction clutch (43).

13. Drive train according to Claim 12, **characterized in that** the friction clutch (43) is configured as a wet multiple disc clutch.

14. Use of a drive train according to one of Claims 1 to 13 for driving a commercial vehicle, in particular an omnibus or as a local transport omnibus.

## Revendications

1. Chaîne cinématique destinée à un véhicule automobile, comportant
1.1 un système de transmission primaire,
1.2 une boîte de vitesse avec commande sous charge qui est disposée en aval du système de transmission primaire dans la direction du flux de puissance,
1.3 un élément de démarrage qui est disposé, dans le flux de puissance, entre le système de transmission primaire et la boîte de vitesse avec commande sous charge et qui comprend au moins un embrayage,
1.4 une machine électrique qui est disposée, dans le flux de puissance, entre l'élément de démarrage (3) et la boîte de vitesse avec commande sous charge (7), **caractérisée en ce que**,
1.5 dans le flux de puissance, en amont et/ou en aval de la boîte de vitesse avec commande sous charge (7), est disposé au moins un retardateur (4, 37, 39).

2. Chaîne cinématique selon la revendication 1, **caractérisée en ce que** la machine électrique (6) est reliée à un arbre d'entrée (17) de la boîte de vitesse avec commande sous charge (7).

3. Chaîne cinématique selon la revendication 1 ou 2, **caractérisée en ce que** l'élément de démarrage (3) comporte un élément hydrodynamique (4).

4. Chaîne cinématique selon la revendication 3, **caractérisée en ce que** l'élément de démarrage (3) comporte un embrayage de pontage mécanique (5) pour l'élément hydrodynamique (4).

5. Chaîne cinématique selon la revendication 4, **caractérisée en ce que** l'embrayage de pontage (5) est réalisé sous la forme d'un embrayage à sec.

6. Chaîne cinématique selon la revendication 3, 4 ou 5, **caractérisée en ce que** l'élément hydrodynamique (4) est réalisé sous la forme d'un embrayage hydrodynamique (4.2) à remplissage constant.

7. Chaîne cinématique selon la revendication 3, 4 ou 5, **caractérisée en ce que** l'élément hydrodynamique (4) est réalisé sous la forme d'un embrayage hydrodynamique à remplissage permanent (4.3) comportant un anneau d'étranglement mobile (40).

8. Chaîne cinématique selon la revendication 3, 4 ou 5, **caractérisée en ce que** l'élément hydrodynamique (4) est réalisé sous la forme d'un convertisseur hydrodynamique (4.4).

9. Chaîne cinématique selon la revendication 3, 4 ou 5, **caractérisée en ce que** l'élément hydrodynamique (4) est réalisé sous la forme d'un embrayage hydrodynamique (4.1) à remplissage régulé.

10. Chaîne cinématique selon l'une quelconque des revendications 6 à 9, **caractérisée en ce qu'**une roue secondaire (13) de l'élément hydrodynamique (4) est reliée à un arbre d'entrée (17) de la boîte de vitesse à commande sous charge (3) par l'intermédiaire d'une roue libre (16).

11. Chaîne cinématique selon la revendication 9 et 10, **caractérisée en ce que** la roue secondaire (13) de l'embrayage hydrodynamique (4.1) peut être soumise à un freinage fixe par l'intermédiaire d'un dispositif de freinage (14).

12. Chaîne cinématique selon la revendication 1 ou 2, **caractérisée en ce que** l'élément de démarrage (3) est réalisé sous la forme d'un embrayage à friction (43).

13. Chaîne cinématique selon la revendication 12, **caractérisée en ce que** l'embrayage à friction (43) est réalisé sous la forme d'un embrayage à disques multiples à bain d'huile.

14. Utilisation d'une chaîne cinématique selon l'une quelconque des revendications 1 à 13 pour l'entraînement d'un véhicule utilitaire, notamment d'un autobus ou en tant qu'autobus de transport urbain.
